# EUROPÄISCHE PATENTSCHRIFT

(11) **EP 0 566 858 B1**
(45) Veröffentlichungstag und Bekanntmachung des Hinweises auf die Patenterteilung: **17.07.1996**
(21) Anmeldenummer: 93104006.7
(22) Anmeldetag: 12.03.1993
(51) Int. Cl.: B23C 5/20

(54) **Schneidplatte für Zerspannungswerkzeuge**
Cutting insert for chip cutting tool
Plaquette de coupe pour outil d'enlèvement de copeaux

(30) Priorität: 18.04.1992 DE 9205366 U
(43) Veröffentlichungstag der Anmeldung: 27.10.1993
(73) Patentinhaber: UNITED HARDMETAL GmbH, D-72152 Horb (DE)
(72) Erfinder: Beuter, Franz, W-7241 Eutingen im Gäu (DE)
(74) Vertreter: Ott, Elmar, Dipl.-Ing.

(56) Entgegenhaltungen:
- EP-A- 0 177 700

## Beschreibung

Die Erfindung betrifft eine Schneidplatte für Zerspanungswerkzeuge gemäß Oberbegriff des Anspruchs 1.

Zum Profilfräsen oder für entsprechende Oberflächenbearbeitungen werden Fräser mit auswechselbaren Schneidplatten verwendet. Die zu bearbeitenden Werkstoffe sind dabei insbesondere Holzwerkstoffe, Kunststoffe und Metalle. Die Schneidplatten aus gesintertem Hartmetall müssen sehr exakt am Fräserkörper positioniert werden, um eine gleichbleibend genaue Oberflächenbearbeitung auch nach dem Auswechseln einer Schneidplatte zu gewährleisten. Die Nutenauflageflächen, an denen die Schneidplatten im Fräserkörper anliegen, müssen daher ebenso wie die korrespondierenden geraden Lagerflächen der herkömmlichen Schneidplatten absolut eben sein. Dies erfordert bei Schneidplatten aus einem gesinterten Schneidwerkstoff fast immer eine schleifende Nachbearbeitung der Lagerflächen.

Aus der EP-B1 0 177 700 ist ein Fräser mit auswechselbaren Schneidplatten bekannt, die jeweils zwei abstehende, radiale Anschlagelemente aufweisen und bei denen eine Ausnehmung vorhanden ist, deren Seitenfläche als axiale Anschlagfläche dient. Durch die Ausnehmung wird die profilierbare Schneidplattentiefe reduziert. Durch die Ausgestaltung der Anschlagelemente kann an diesen bekannten Schneidplatten nur an einer Seite eine Schneide ausgebildet werden.

Der Erfindung liegt die Aufgabe zugrunde, eine Schneidplatte zu schaffen, die eine exakte Positionierung am Fräserkörper ermöglicht.

Die Lösung dieser Aufgabe erhält man mit den Merkmalen des Anspruchs 1. Die abstehenden Lagerabschnitte können gerundete oder gerade Lagerflächen haben, wobei vorzugsweise die Lagerflächen so ausgebildet sind, daß diese im Eckbereich der Schneidplatte weniger weit abstehen als weiter innen. Dadurch erhält man für jeden Lagerabschnitt einen vom Eckpunkt entfernten, weiter innen liegenden Auflagepunkt, wodurch eine wesentlich exaktere Positionierung der Schneidplatte möglich wird. Die Schneidplatte kann sich nämlich während des Sintervorganges konkav oder konvex wölben. Eine herkömmliche Schneidplatte, die eine gerade Grundseite als Auflagefläche haben soll, kann dadurch eine nach außen gewölbte Grundseite erhalten, wodurch ein undefinierter Auflagepunkt an der Grundseite entsteht. Die erfindungsgemäß ausgebildete Schneidplatte vermeidet diesen Nachteil durch gerundete oder geneigte Lagerflächen. Werden die Lagerflächen als waagrechte, gerade Lagerfläche ausgebildet, kann durch Nachschleifen der Lagerflächen die durch den Herstellungsprozeß bedingte Wölbung - konkav oder konvex - beseitigt werden.

Die Lagerflächen so auszubilden, daß die Auflagepunkte im Abstand von den Eckpunkten der Schneidplatte sich befinden, hat den weiteren Vorteil, daß auch dann eine definierte Zweipunktauflage an der Grundfläche der hierfür vorgesehenen Nut eines Fräserkörpers gewährleistet ist, wenn die Schneidplatte seitlich geringfügig am Fräserkörper übersteht. Der an der überstehenden Seite befindliche Lagerabschnitt hat einen zur Mitte der Grundseite versetzten Lagerpunkt, der somit an der Grundfläche der Nut des Fräserkörpers aufliegen kann.

Die Lagerflächen können als Lagerabschnitte ausgebildet sein, die wesentlich kürzer sind, als die Breite der Schneidplatte. Dadurch wird auch bei nicht völlig exakt ebenem Nutengrund eine genauere Positionierung möglich, als dies bei Schneidplatten mit durchgehender waagerechter Lagerfläche der Fall ist. Die Schneidplatten mit durchgehender Lagerfläche sind bezüglich vorhandener Welligkeiten am Nutengrund oder an den Lagerflächen sehr empfindlich, d. h. daß schon geringste Welligkeiten zu einer instabilen und damit ungenauen Lagerung führen können.

Die Länge eines Lagerabschnitts ist geringer als die Hälfte der Breite der Schneidplatte. Eine kurze, gerade Lagerfläche bietet damit annähernd die Vorteile einer punktförmigen Lagerung, während außerdem die Möglichkeit des Nachschleifens gegeben ist.

Die Lagerabschnitte stehen vorzugsweise an den Ecken der Schneidplatte ab und können übereck verlaufende Lagerflächen besitzen. Diese Lagerflächen können als Radiallager und Axiallager dienen.

Als Axiallager können auch seitliche Begrenzungen eines waagerechten Lagerabschnitts dienen. Dabei kann es sich um die äußere oder die zur Mitte der Schneidplatte weisende innere Begrenzung handeln.

Die erfindungsgemäße Schneidplatte hat weiterhin den Vorteil, daß diese an mehreren Seiten ein schneidendes Profil besitzen kann. Die abstehenden Lagerabschnitte schwächen die profilierbare Schneidplattentiefe nicht, so daß eine optimale Materialausnutzung erreicht wird.

Die Erfindung wird nachfolgend anhand der in der Zeichnung dargestellten Ausführungsbeispiele näher erläutert.

Es zeigen:
Figur 1 eine Schneidplatte mit zwei radial wirkenden, gerundeten Lagerflächen und einer seitlichen, axial wirkenden Anschlagfläche,
Figur 2 eine stark vergrößerte Darstellung der Lagerabschnitte mit den gerundeten Lagerflächen der Schneidplatte gemäß Figur 1,
Figur 3 eine stark vergrößerte Darstellung einer Schneidplatte im Eckbereich der Schneidplattengrundseite mit einem Lagerabschnitt, der eine geneigte Lagerfläche besitzt,
Figur 4 eine Schneidplatte mit zwei radial wirkenden Lagerflächen und einer axialen Anschlagfläche,
Figur 5 eine Schneidplatte mit übereck verlaufenden Lagerflächen,
Figur 6 eine als Wendeplatte ausgebildete Schneidplatte mit allseitig angeordneten Lagerflächen bzw. Anschlagflächen,
Figur 7 eine Schneidplatte mit tiefer Profilierung,
Figur 8 ein weiteres Ausführungsbeispiel einer Schneidplatte und
Figur 9 eine vierseitig verwendbare Schneidplatte mit übereck angeordneten Lagerflächen.

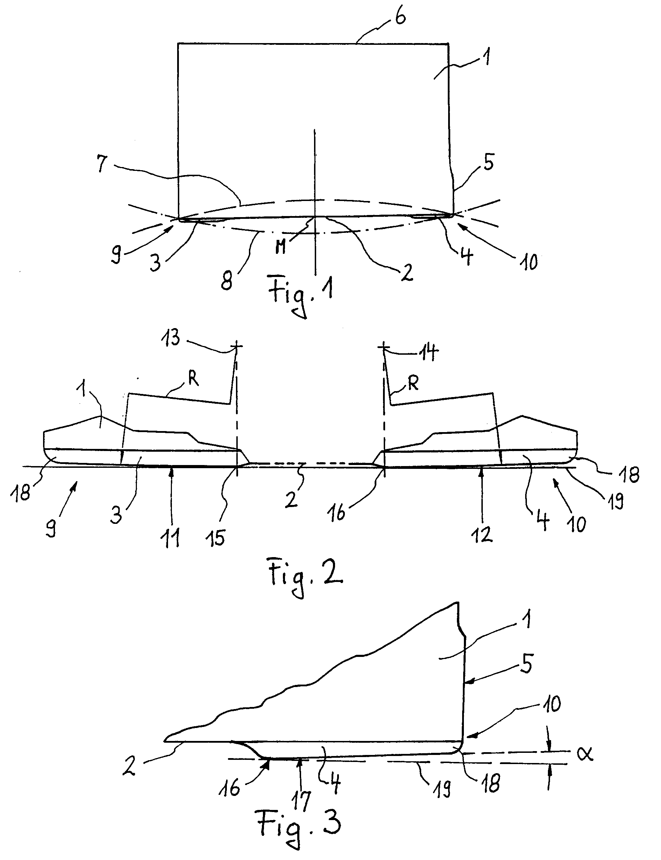

Die in Figur 1 dargestellte Schneidplatte 1 besitzt an ihrer Schneidplattengrundseite 2 in den Eckbereichen jeweils einen nach unten abstehenden Lagerabschnitt 3, 4. Rechts unten verläuft der Lagerabschnitt 4 übereck, so daß seitlich eine axiale Anschlagfläche 5 entsteht. Die Schneidplatte 1 besitzt an ihrer Oberkante eine gerade Schneide 6 und ist aus gesintertem Hartmetall als einstückiger Schneidling gefertigt.

Während des Sintervorganges kann sich die Schneidplatte 1 entsprechend der unterbrochenen Linie 7 konkav oder entsprechend der strichpunktierten Linie 8 konvex wölben. Die Wölbungen sind hier zur besseren Veranschaulichung mit einem stark verkleinerten Wölbungsradius eingezeichnet.

In Figur 2 sind die Eckbereiche 9, 10 der Schneidplatte 1 stark vergrößert dargestellt. Die Lagerabschnitte 3, 4 besitzten halbkreisförmig gerundete Lagerflächen 11, 12 mit einem verhältnismäßig großen Radius R, wobei die Kreismittelpunkte 13, 14 jeweils senkrecht über dem nach innen versetzten Auflagepunkt 15, 16 liegen.

In Figur 3 ist der Eckbereich 10 einer Schneidplatte 1 dargestellt, die anstelle einer gerundeten Lagerfläche eine geneigte Lagerfläche 17 hat. Die Lagerfläche 17 ist um den Winkel α gegenüber der Grundseite 2 geneigt, und zwar so, daß am Eckpunkt 18 der Lagerabschnitt 4 wenigerweit von der Grundseite 2 absteht als weiter innen am Auflagepunkt 16.

Die Lagerpunkte 15, 16 (Figur 2 und Figur 3) kommen an dem hier nicht dargestellten Fräserkörper auf einer Auflageebene 19 zur Anlage. Zu dieser Auflageebene 19 verläuft die seitliche Anschlagfläche 5 senkrecht, sofern die Anschlagfläche 5 als gerade Lagerfläche ausgebildet ist, wie dies in Figur 3 dargestellt ist. Die Anschlagfläche 5 kann jedoch ebenso wie die Lagerflächen 11, 12 und 17 gerunden oder als geneigte Lagerfläche ausgebildet sein.

Die nachfolgend aufgeführten Ausführungsbeispiele von Schneidplatten besitzen Lagerflächen und Anschlagflächen, die vorzugsweise wie in Figur 1 bis Figur 3 angegeben, gerundet oder geneigt sind. Es besteht jedoch auch die Möglichkeit, die als radiale Lager dienenden Lagerflächen an der Grundseite der Schneidplatten waagerecht auszubilden, wobei es in diesem Fall sinnvoll sein kann, die Lagerabschnitte und somit auch die Lagerflächen insgesamt etwas von den Eckpunkten der Schneidplatten entfernt zur Mitte M (Figur 1) versetzt anzuordnen.

Die in Figur 4 dargestellte Schneidplatte 21 hat ebenso wie die in den übrigen Figuren dargestellten Schneidplatten 22 bis 26 überstehende Lagerabschnitte 27, 28, die gerade oder gewölbte Lagerflächen 29 und eine senkrechte Lagerfläche bzw. Anschlagfläche 30 haben. Die Schneidplatten 21 bis 26 bestehen vorzugsweise aus gesintertem Hartmetall, wobei die Lagerflächen 29, 30 für die meisten Anwendungsfälle ohne zusätzliche Nachbearbeitung ausreichend genau sind. Die Lagerflächen 29, 30 sind verhältnismäßig kurz, so daß auch bei waagerechten Lagerflächen eine faßt punktförmige Auflage erreicht wird. Dadurch wird an den Nutengrund des Fräserkörpers, an welchem die Schneidplatten aufliegen, keine besonders hohe Anforderung bezüglich der Ebenheit gestellt. Selbst wenn die Schneidplattengrundseite 2, 31 der Schneidplatten 1 und 21 bis 26 während des Sintervorgangs sich konvex wölbt, ist dies ebenfalls ohne Bedeutung, da die Schneidplatte lediglich auf den zwei überstehenden Lagerabschnitten 3, 4 und 27, 28 bzw. deren Lagerflächen aufliegt.

Die Lagerflächen 29 dienen als radiale Lager, während die Lagerfläche 30 einen axialen Anschlag darstellt und die Schneidplatte 21 in einer exakten axialen Position hält.

Die Schneidplatte 21 besitzt eine Rundung als Schneide 32, um beispielsweise Leisten mit einem Hohlprofil zu fräsen.

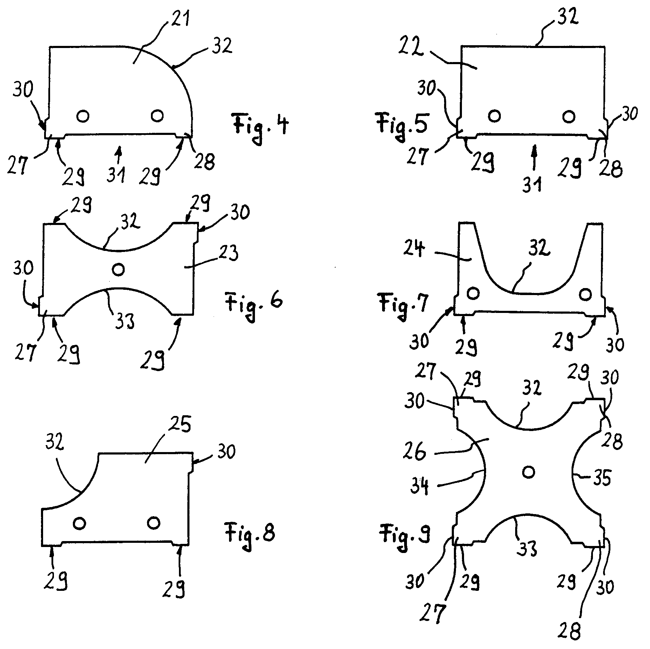

Die in Figur 5 dargestellte Schneidplatte 22 besitzt an ihren beiden unteren Ecken übereck verlaufende Lagerflächen 29, 30, die von überstehenden Lagerabschnitten 27, 28 gebildet werden. Bei der Schneidplatte 22 ist die Schneide 32 gerade ausgebildet.

Die in Figur 6 dargestellte Schneidplatte 23 besitzt zwei gegenüberliegende Schneiden 32, 33 und kann als Wendeplatte verwendet werden.

Die Schneidplatte 24 gemäß Figur 7 besitzt eine sehr tief nach unten gezogene U-förmige Schneide 32 und kann als Wechselplatte verwendet werden. Zu diesem Zweck sind übereck angeordnete Lagerflächen 29, 30 vorgesehen.

Die Schneidplatte 25 gemäß Figur 8 besitzt eine seitlich ausgerichtete, gerundete Schneide 32.

Die in Figur 9 dargestellte Schneidplatte 26 ist allseitig mit jeweils einer Schneide 32 bis 35 versehen und hat insgesamt vier übereck jeweils im rechten Winkel zueinander verlaufende Lagerflächen 29, 30.

## Patentansprüche

1. Schneidplatte (1) für Zerspanungswerkzeuge, die mittels Fixiereinrichtungen in Nuten oder dgl. Aussparungen eines Fräserkörpers fixierbar ist und die mit an ihr ausgebildeten gerundeten Lagerabschnitten (3, 4) am Fräserkörper in einer definierten Position anliegt, wobei die an der Schneidplatte (1) abstehenden Lagerabschnitte (3, 4) sich nur über einen Teil der Breite der Schneidplatte (1) erstrecken, **dadurch gekennzeichnet**, daß die Lagerabschnitte (3, 4) mit einem Radius (R), der ein Vielfaches der Länge eines Lagerabschnitts (3, 4) beträgt, gerundete oder gerade Lagerflächen (11, 12, 17) haben, und daß die Lagerabschnitte (3, 4) etwas geneigt verlaufen, so daß schneidplatteninnere Ränder der Lagerabschnitte (3, 4) weiter von der Schneidplatte (1) abstehen als schneidplattenäußere Ränder.

2. Schneidplatte nach Anspruch 1, **dadurch gekennzeichnet**, daß die Lagerflächen (17) der an einer Schneidplattengrundseite (2) abstehenden Lagerabschnitte (4) gegenüber der durch Lagerpunkte (15, 16) beider Lagerabschnitte (3, 4) verlaufenden Auflageebene (19) in einem spitzen Winkel (α) geneigt sind.

3. Schneidplatte nach einem der vorhergehenden Ansprüche, **dadurch gekennzeichnet**, daß die Länge eines Lagerabschnitts (3, 4, 27, 28) kleiner ist als 1/4 der Breite der Schneidplatte (1, 21 bis 26).

4. Schneidplatte nach einem der vorhergehenden Ansprüche, **dadurch gekennzeichnet**, daß die Lagerabschnitte (3, 4, 27, 28) an den Ecken der Schneidplatte (1, 21 bis 26) abstehen.

5. Schneidplatte nach Anspruch 4, **dadurch gekennzeichnet**, daß die Lagerabschnitte (3, 4, 27, 28) sich übereck erstrecken.

6. Schneidplatte nach einem der vorhergehenden Ansprüche, **dadurch gekennzeichnet**, daß als Radiallager zwei an einer Schneidplattengrundseite (2) im Abstand angeordnete Lagerflächen (11, 17, 29) und als Axiallager seitliche Lagerflächen (5, 30) oder Anschlagflächen vorgesehen sind.

7. Schneidplatte nach einem der vorhergehenden Ansprüche, **dadurch gekennzeichnet**, daß die seitliche Begrenzung einer an der Schneidplattengrundseite (2) ausgebildeten Lagerfläche (12, 17, 29) eine seitliche Anschlagfläche (5, 30) bildet.

## Claims

1. Cutting plate (1) for cutting tools, which can be fixed by means of fixing devices in grooves or similar recesses of a cutter body and engaging in a clearly defined position with rounded bearing portions (3, 4) formed thereon on the cutter body, the bearing portions (3, 4) projecting from the cutter insert (1) only extending over part of the width of said cutter insert (1), characterized in that the bearing portions (3, 4) have rounded or straight bearing faces (11, 12, 17) with a radius (R) which is a multiple of the length of the bearing portions (3, 4) and that the bearing portions (3, 4) are somewhat inclined, so that the cutting insert-inner edges of the bearing portions (3, 4) project further from the cutting insert (1) than the cutting insert-outer edges.

2. Cutting insert according to claim 1, characterized in that the bearing faces (17) of the bearing portions (4) projecting from a cutting insert base side (2) are inclined at an acute angle (α) with respect to the bearing plane (19) running through bearing points (15, 16) of both bearing portions (3, 4).

3. Cutting insert according to one of the preceding claims, characterized in that the length of a bearing portion (3, 4, 27, 28) is smaller than one quarter of the width of the cutting insert (1, 21 to 26).

4. Cutting insert according to one of the preceding claims, characterized in that the bearing portions (3, 4, 27, 28) project at the corners of the cutting insert (1, 21 to 26).

5. Cutting insert according to claim 4, characterized in that the bearing portions (3, 4, 27, 28) extend diagonally.

6. Cutting insert according to one of the preceding claims, characterized in that as journal bearings are provided two bearing faces (11, 17, 29) arranged in spaced manner on a cutting insert base side (2) and as thrust bearings are provided lateral bearing faces (5, 30) or stop faces.

7. Cutting insert according to one of the preceding claims, characterized in that the lateral boundary of a bearing face (12, 17, 29) formed on the cutting insert base side (2) forms a lateral stop face (5, 30).

## Revendications

1. Plaquette de coupe (1) pour outil d'enlèvement de copeaux pouvant être fixée dans des rainures ou autres évidements similaires d'une frêse, ajustée à la frêse dans une position définie avec des segments d'appui d'un façonnage arrondi, les segments de support (3,4) de la plaquette de coupe (1) étant seulement limitées à une partie de la largeur de la plaquette de coupe (1), et **caractérisée en ce que** les segments de support (3,4) d'un rayon (R) de plusieurs fois la longueur d'un segment de support (3,4) ont des surfaces d'appui (11, 12, 17) arrondies ou planes, et sont légèrement inclinés, de sorte que des bords des segments de support (3,4) intérieurs à la plaquette de coupe (1) se trouvent à plus grande distance de cette dernière que des bords extérieurs.

2. Plaquette de coupe (1) suivant la revendication 1, **caractérisée en ce que** les surfaces d'appui (17) des segments de support (3,4) non en contact avec un côté de base (2) de la plaquette de coupe (1), forment un angle aigü (α) incliné par rapport à la surfaces d'appui (19) passant par les points d'appui (15, 16) des deux segments de support (3,4).

3. Plaquette de coupe (1) suivant l'une des revendications précédentes, **caractérisée en ce que** la longueur d'un segment de support (3, 4, 27, 28) est plus petite que le 1/4 de la largeur de la plaquette de coupe (1, 21 à 26).

4. Plaquette de coupe (1) suivant l'une des revendications précédentes, **caractérisée en ce que** les segments de support (3, 4, 27, 28) ne sont pas en contact aux angles de la plaquette de coupe (1, 21 à 26).

5. Plaquette de coupe suivant la revendication 4, **caractérisée en ce que** les segments de support (3,4, 27, 28) sont placés sur l'angle.

6. Plaquette de coupe suivant l'une des revendications précédentes, **caractérisée en ce que**, comme appuis radiaux deux surfaces d'appui (11, 17, 29) placées à intervalles sur un côté de base de la plaquette de coupe (2) sont prévues et code appuis axiaux, des surfaces d'appui latérales (5, 30) ou des surfaces de butée.

7. Plaquette de coupe suivant l'une des revendications précédentes, **caractérisée en ce que** la limitation latérale d'une surface d'appui (12, 17, 29) façonnée sur le côté de base de la plaquette de coupe (2) forme une butée latérale (5, 30).
